# EUROPEAN PATENT APPLICATION

(11) **EP 3 075 290 A1**
(43) Date of publication of application: **05.10.2016**
(21) Application number: 16162729.4
(22) Date of filing: 30.03.2016
(51) Int. Cl.: A47J 31/44

(54) **COFFEE MACHINE**

(30) Priority: 31.03.2015 CN 201510147500
(71) Applicant: Tsann Kuen (Zhangzhou) Enterprise Co., Ltd., Fujian 363107 (CN)
(72) Inventor: Zhong, Weijun, Zhangzhou, Fujian 363107 (CN); Yan, Fu, Zhangzhou, Fujian 363107 (CN)
(74) Representative: Meissner Bolte Partnerschaft mbB

(57) **Abstract**

A coffee machine includes a brewing device (1) including a steam spout (13), a milk box (4) having a box body (41) that is coupled removably to the brewing device (1), and that has a top surface (411) formed with a steam inlet portion (42) that is disposed below the steam spout (13), and an operating device (5) including a driving unit (52) and a linking member (53) that is pivotally connected between the driving unit (52) and the steam spout (13). The driving unit (52) is rotatable to move the steam spout (13) downwardly to an engaging position, where the steam spout (13) engages the steam inlet portion (42), and is reversely rotatable to move the steam spout (13) upwardly to a disengaging position, where the steam spout (13) is disengaged from the steam inlet portion (42).

## Description

The disclosure relates to a coffee machine, and more particularly to a coffee machine adapted to brew coffee and produce steam.

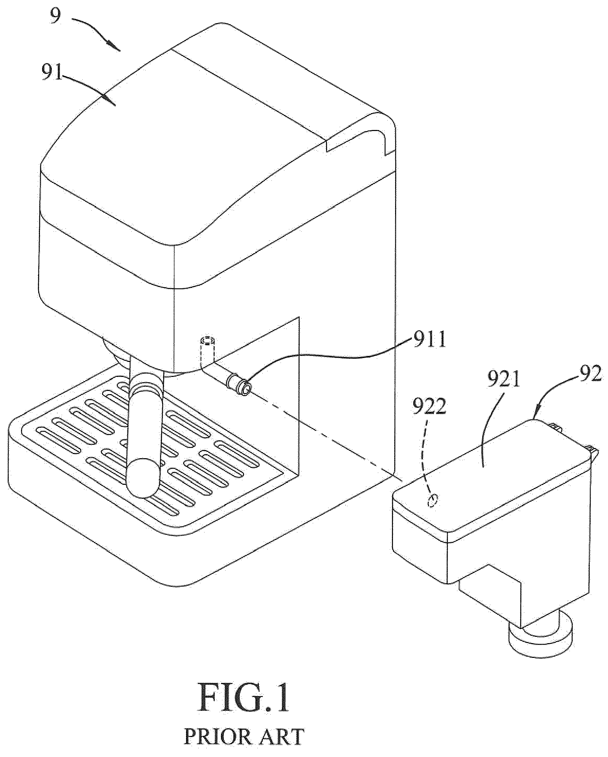

Referring to Figure 1, a conventional coffee machine 9 includes a brewing device 91 operable to generate steam, and a milk box 92. The brewing device 91 includes a steam spout 911 used to deliver the steam that is generated by the brewing device 91. The milk box 92 includes a box body 921 for containing milk to be frothed, and a steam inlet portion 922 formed on a side wall of the box body 921, horizontally engageable with the steam spout 911 of the brewing device 91, and serving to permit entry of the steam that exits the steam spout 911 of the brewing device 91 into the box body 921.

During operation, the steam enters into the box body 921 of the milk box 92 and heats the milk to form a soft, creamy froth.

When installing the milk box 92 on the brewing device 91, the steam spout 911 of the brewing device 91 needs to be accurately aligned with the steam inlet portion 922 of the milk box 92 such that the steam spout 911 engages the steam inlet portion 922. However, since the steam spout 911 and the steam inlet portion 922 are not large in size, alignment between the two cannot be easily achieved. Therefore, installation of the milk box 92 on the brewing device 91 is somewhat inconvenient.

In addition, due to the horizontal aligning configuration between the steam spout 911 of the brewing device 91 and the steam inlet portion 922 of the milk box 92, any sudden jet force created by the steam may result in shaking or detachment of the milk box 92, so that the leaked steam may cause injury to a user, thereby creating safety concerns.

Therefore, the object of the disclosure is to provide a coffee machine that is easy and safer to operate, and that can be conveniently disassembled and assembled.

According to the disclosure, the coffee machine includes a brewing device including a steam spout for downwardly discharging steam, a milk box having a box body that is coupled removably to the brewing device, and that has a top surface formed with a steam inlet portion that is disposed below the steam spout, and an operating device including a driving unit and a linking member that is pivotally connected between the driving unit and the steam spout. The driving unit is rotatable in a first rotational direction to move the steam spout downwardly to an engaging position, where the steam spout engages the steam inlet portion to permit entry of the steam into the box body. The driving unit is rotatable in a second rotating direction which is opposite to the first rotational direction to move the steam spout upwardly to a disengaging position, where the steam spout is disengaged from the steam inlet portion.

Other features and advantages of the disclosure will become apparent in the following detailed description of the embodiment with reference to the accompanying drawings, of which:
Figure 1 is a perspective view of a conventional coffee machine, illustrating a milk box being separated from a brewing device;
Figure 2 is a perspective view of an embodiment of a coffee machine according to the disclosure, illustrating a milk box being separated from a brewing device;
Figure 3 is a fragmentary perspective view of an operating device, a steam spout of the brewing device and the milk box of the embodiment, illustrating the steam spout at a disengaging position;
Figure 4 is a fragmentary sectional view of the embodiment when the steam spout is at an engaging position;
Figure 5 is a fragmentary exploded view of the operating device of the disclosure;
Figure 6 is a view similar to Figure 4, but illustrating the steam spout at the disengaging position; and
Figure 7 is a fragmentary sectional view of a frame unit, a driving unit and a linking member of the operating device of the embodiment.

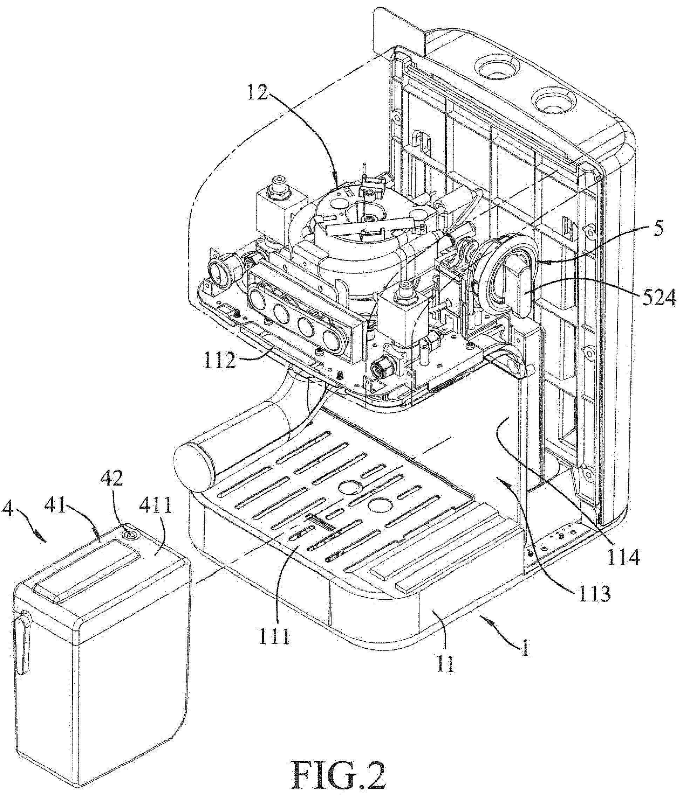

Referring to Figures 2 to 4, the embodiment of a coffee machine includes a brewing device 1, a milk box 4, and an operating device 5.

The brewing device 1 includes a housing 11, a steam-generating unit 12 mounted in the housing 11 for generating steam, and a steam spout 13 for downwardly discharging the steam. The housing 11 has spaced-apart lower and upper walls 111, 112, a receiving space 113 defined between the lower and upper walls 111, 112, and a stop member 114 disposed below the upper wall 112 and made of plastic materials. The steam-generating unit 12 has a soft tube 121 connected to the steam spout 13 for delivering the steam into the steam spout 13.

The brewing device 1 may include a grinding unit, a water supply unit, and a filtering unit connected to the housing 11. In addition, the steam-generating unit 12 may include a tank, a heater, and a pump. Since the brewing device 1 and the steam-generating unit 12 are well-known in the art, details are thereby omitted herein for the sake of brevity.

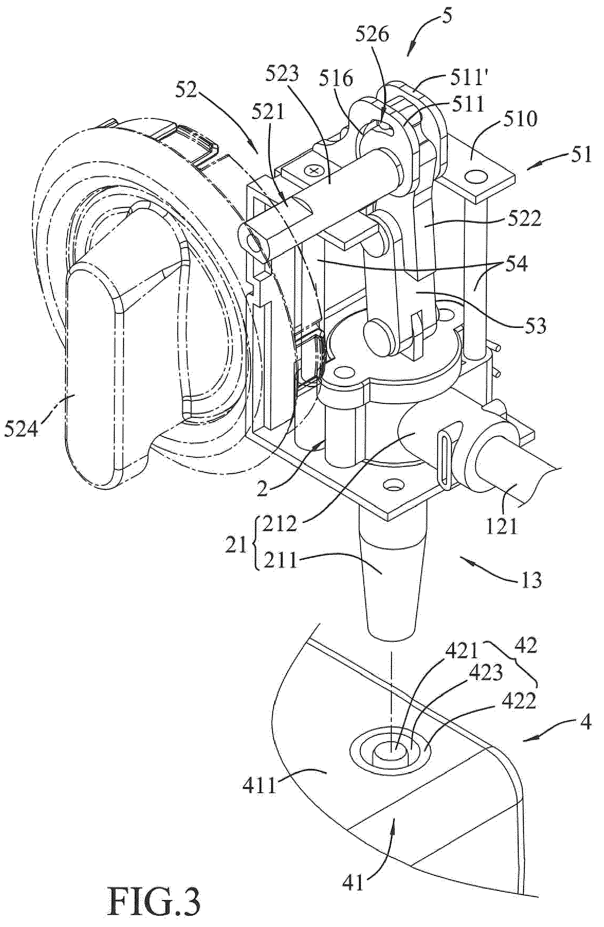

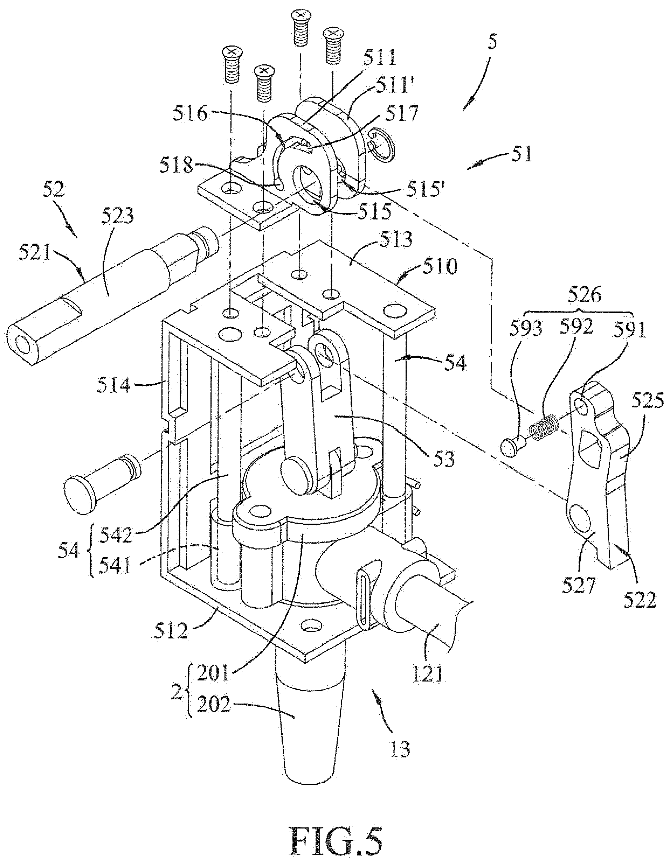

Referring to Figures 3 to 5, the steam spout 13 of the brewing device 1 has a seat body 2 and a control valve 3. In this embodiment, the seat body 2 is combined from a first shell member 201 and a second shell member 202 that is disposed under and coupled to the first shell member 201. It should be noted that, the position of the second shell member 202 relative to the first shell member 201 may vary in other embodiments.

The seat body 2 has an outer wall 21 defining a steam passage 23, and an annular block wall 22 extending inwardly from the outer wall 21 into the steam passage 23. The outer wall 21 has a vertical first wall portion 211 and a second wall portion 212 extending horizontally from the first wall portion 211. The soft tube 121 of the steam-generating unit 12 is connected to the second wall portion 212 of the seat body 2.

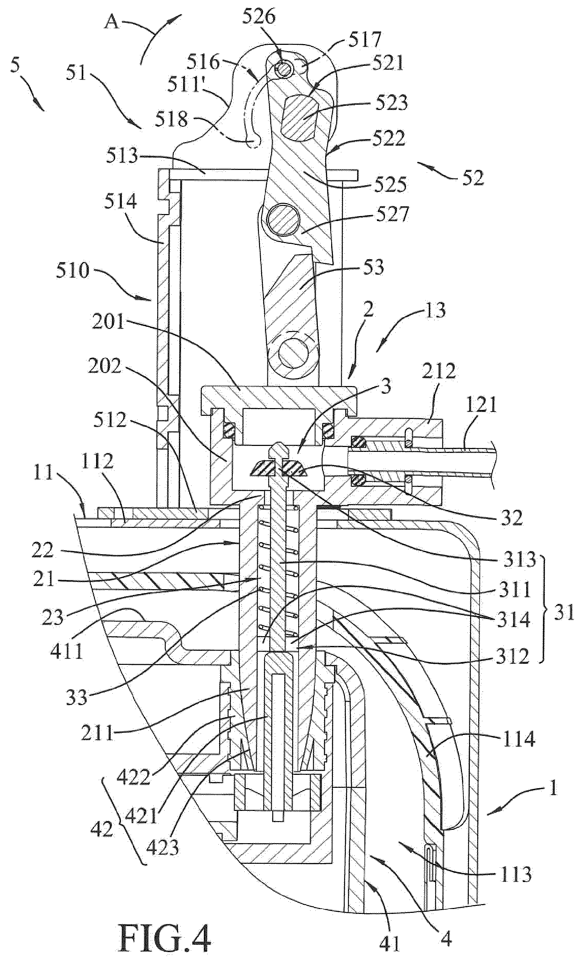

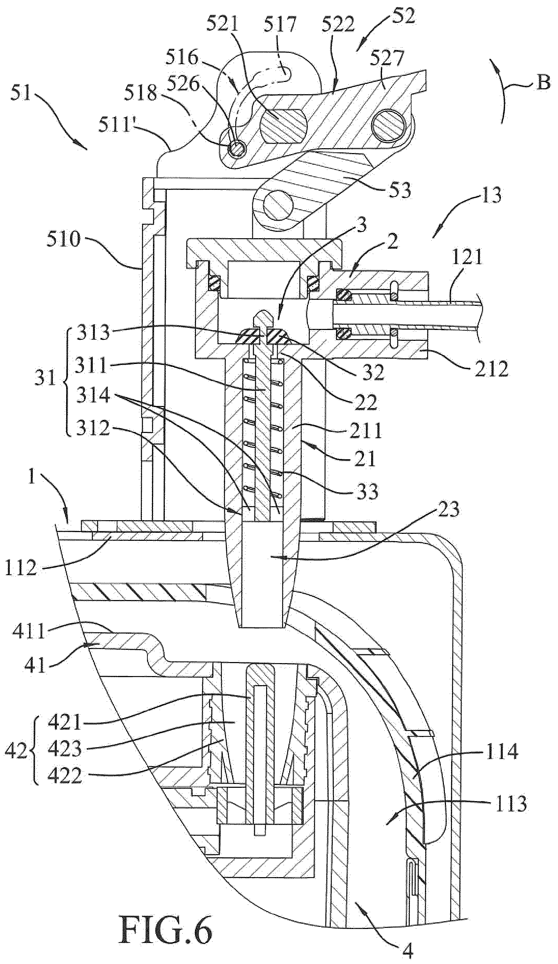

As shown in Figures 4 and 6, the control valve 3 is disposed in the outer wall 21 and is operable for controlling passage of the steam through the steam passage 23. The control valve 3 has a control rod 31, a sealing member 32 and a resilient member 33. The control rod 31 has a rod segment 311 extending through the block wall 22 and being upwardly and downwardly movable, an abutment segment 312 connected to a bottom end of and having a diameter larger than that of the rod segment 311, and a neck segment 313 having a diameter smaller than that of the rod segment 311. The abutment and neck segments 312, 313 are disposed at opposite sides of the block wall 22. In this embodiment, the abutment segment 312 is formed with a plurality of vent holes 314 extending therethrough in an up-down direction. In other embodiments, the abutment segment 312 may be formed with only one vent hole 314. The sealing member 32 is sleeved on the neck segment 313 of the control rod 31, and is disposed above the block wall 22. The resilient member 33 has top and bottom ends respectively and resiliently biasing against the block wall 22 and the abutment segment 312 of the control rod 3. In this embodiment, the sealing member 32 is in the shape of an O-ring, and the resilient member 33 is a compression spring so as to bias the sealing member 32 downwardly to abut against the block wall 22.

Referring to Figures 2, 3 and 6, in this embodiment, the milk box 4 has a box body 41 coupled removably to the brewing device 1 and having a top surface 411 that is formed with a steam inlet portion 42 disposed below the steam spout 13. The box body 41 is disposed in the receiving space 113 of the housing 11 when being coupled to the brewing device 1, such that upward and downward movements of the milk box 4 during operation of the coffee machine can be limited by the stop member 114. The steam inlet portion 42 of the milk box 4 has an inserting wall 421, and a surrounding wall 422 surrounding the inserting wall 421 and cooperating with the inserting wall 421 to define an inserting groove 423 therebetween.

Referring to Figures 2 to 4, in this embodiment, the operating device 5 includes a frame unit 51 mounted on the brewing device 1, a driving unit 52 rotatably connected to the frame unit 51, a linking member 53 pivotally connected between the driving unit 52 and the steam spout 13, and two guiding units 54 mounted on the frame unit 51 (see Figure 3).

As shown in Figures 3 to 5, in this embodiment, the frame unit 51 includes a substantially C-shaped base frame 510 mounted on the brewing device 1, a first fixing member 511, and a second fixing member 511'.

The base frame 510 has a bottom wall portion 512, a top wall portion 513 spaced apart and located above the bottom wall portion 512, and a side wall portion 514 connected between the bottom and top wall portions 512, 513. The steam spout 13 extends through the bottom wall portion 512, and the first and second fixing members 511, 511' are mounted on the top wall portion 513 of the base frame 510 and are spaced apart from each other. The first fixing member 511 has a first mounting hole 515 and a limiting groove 516 extending along an arc about a center of the first mounting hole 515. The limiting groove 516 has opposite first and second ends 517, 518. In this embodiment, the second fixing member 511' has a second mounting hole 515'. Although in this embodiment, the second fixing member 511' is employed merely to enhance the structural strength of the operating device 5, the second fixing member 511' may have a configuration identical to the first fixing member 511 or may even be omitted in other embodiments.

The driving unit 52 includes a turning member 521 and a pivoting member 522.

As shown in Figures 2, 3 and 5, the turning member 521 has a rod portion 523 rotatably engaging the first and second mounting holes 515, 515' of the first and second fixing members 511, 511' , and a knob portion 524 connected to an end of the rod portion 523. In this embodiment, the rod portion 523 and the knob portion 524 are manufactured separately and are coupled together, but may be formed as one piece in other embodiments.

As shown in Figures 4, 5 and 7, the pivoting member 522 has a connecting portion 525, a limiting portion 526 and a driving portion 527. The connecting portion 525 is connected between the limiting portion 526 and the driving portion 527, and is fixedly connected to the turning member 521 at a position opposite to the knob portion 524 so that the pivot member 522 is co-rotatable with the turning member 521. The limiting portion 526 movably engages the limiting groove 516 of the first fixing member 511, such that a rotational angle of the driving unit 52 is limited by the limiting groove 516. The driving portion 527 is pivotally connected to the linking member 53. The limiting portion 526 and the connecting portion 525 of the pivoting member 522 are located between the first and second fixing members 511, 511'.

In this embodiment, the limiting portion 526 has a receiving groove 591, a resilient component 592 disposed in the receiving groove 591, and an abutment block 593 having one part that is disposed in the receiving groove 591 and the other part that extends out of the receiving groove 591. The resilient component 592 is a compression spring for biasing the abutment block 593 toward the limiting groove 516 of the first fixing member 511 so that the abutment block 593 is slidable along the limiting groove 516. It should be further noted that the limiting portion 526 and the connecting portion 525 may be formed as one piece in other embodiments.

Referring to Figures 3 to 5, in this embodiment, each of the guiding units 54 has a guiding channel 541 extending through the outer wall 21 of the steam spout 13 in the up-down direction, and a guiding rod 542 mounted on the bottom wall portion 512 of the base frame 510 and extending upwardly in the up-down direction. The guiding rod 542 is slidably inserted into the guiding channel 541 for limiting the steam spout 13 to only be upwardly and downwardly movable in the up-down direction. In other embodiments, the positions of the guiding channel 541 and the guiding rod 542 may be interchangeable and the number of the guiding unit 54 may vary.

During operation, the driving unit 52 is rotatable in a first rotational direction (A) (see Figure 4) to move the steam spout 13 downwardly to an engaging position, where the steam spout 13 engages the steam inlet portion 42 to permit entry of the steam into the box body 41 of the milk box 4, and is rotatable in a second rotational direction (B) (see Figure 6) which is opposite to the first rotational direction (A) to move the steam spout 13 upwardly to a disengaging position, where the steam spout 13 is disengaged from the steam inlet portion 42.

Referring to Figures 3 and 4, when the knob portion 524 of the turning member 521 is rotated in the first rotational direction (A), the pivoting member 522 is rotated together with knob portion 524 via the rod portion 523 of the turning member 521, so that the driving portion 527 of the pivoting member 522 swings downwardly to drive downward movement of the steam spout 13 to the engaging position. At the same moment, the steam spout 13 can only move downwardly in the up-down direction to engage the steam inlet portion 42 with the guidance of the guiding unit 54.

Referring further to Figure 6, when the knob portion 524 of the turning member 521 is rotated in the second rotational direction (B), the pivoting member 522 is rotated together with knob portion 524 via the rod portion 523 of the turning member 521, so that the driving portion 527 of the pivoting member 522 swings upwardly to drive upward movement of the steam spout 13. At the same moment, the steam spout 13 can only move upwardly in the up-down direction to disengage from the steam inlet portion 42 with the guidance of the guiding unit 54 to the disengaging position.

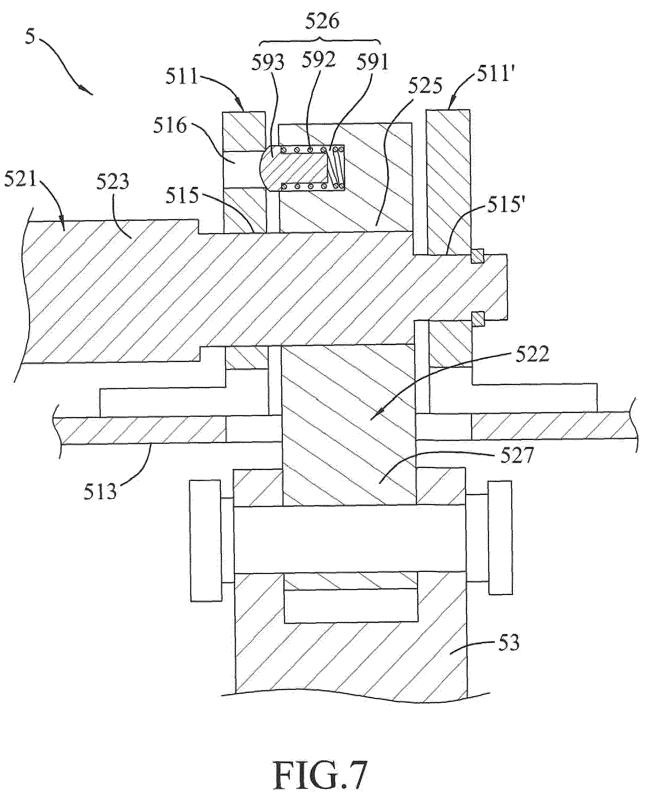

When the steam spout 13 is at the engaging position, the milk box 4 is received in the receiving space 113 and is disposed between the lower wall 111 and the upper wall 112 of the housing 11, and the abutment block 593 (see Figure 7) of the limitingportion 526 of the pivoting member 522 is located at the first end 517 of the limiting groove 516 of the first fixing member 511. At this moment, the first wall portion 211 of the steam spout 13 extends into the inserting groove 423 of the steam inlet portion 42, and the inserting wall 421 of the steam inlet portion 42 extends into the steam passage 23 of the seat body 2 and pushes the abutment segment 312 of the control rod 31 against a resilient force of the resilient member 33, so that the sealing member 32 is moved upwardly to be separated from the block wall 22 to allow the passage of the steam through the vent holes 314 to the steam inlet portion 42. Therefore, the steam generated by the steam-generating unit 2 can be delivered to the steam inlet portion 42 through the soft tube 121, and then enter into the milk box 4 to be used.

When the steam spout 13 is moved from the engaging position to the disengaging position, the abutment block 593 (see Figure 7) of the limiting portion 526 of the pivoting member 522 is moved along the limiting groove 516 from the first end 517 to the second end 518. At this moment, the first wall portion 211 of the steam spout 13 is disengaged from the inserting groove 423 of the steam inlet portion 42, and the resilient member 33 biases downwardly the abutment segment 312 to move the control rod 31 downwardly, so that the sealing member 32 airtightly abuts against the block wall 22 of the seat body 2 to block the passage of the steam through the steam passage 23.

In conclusion, with the design of the operating device 5, the coffee machine is easy to operate and the milk box 4 of the coffee machine can be conveniently assembled and disassembled. In addition, with the disposition of the milk box 4 below the steam spout 13 and between the lower and upper walls 111, 112 of the housing 11, the connecting stability between the steam spout 13 and the steam inlet portion 42 is increased, and leakage of high temperature steam due to separation of the steam spout 13 from the milk box 4 can be prevented. Furthermore, the design of the guiding unit 54 also results in a better connecting stability between the steam spout 13 and the steam inlet portion 42.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

## Claims

1. A coffee machine including:
a brewing device (1) including a steam spout (13) for downwardly discharging steam; and
a milk box (4) having a box body (41) that is coupled removably to said brewing device (1), and that has a top surface (411) formed with a steam inlet portion (42) that is disposed below said steam spout (13);
**characterized in that** said coffee machine further includes an operating device (5) including a driving unit (52) and a linking member (53) that is pivotally connected between said driving unit (52) and said steam spout (13),
said driving unit (52) being rotatable in a first rotational direction (A) to move said steam spout (13) downwardly to an engaging position, where said steam spout (13) engages said steam inlet portion (42) to permit entry of the steam into said box body (41), and
said driving unit (52) being rotatable in a second rotational direction (B) which is opposite to the first rotational direction (A) to move said steam spout (13) upwardly to a disengaging position, where said steam spout (13) is disengaged from said steam inlet portion (42).

2. The coffee machine as claimed in claim 1, further **characterized in that**:
said operating device (5) further includes a frame unit (51) mounted on said brewing device (1), and including a first fixing member (511) that has a first mountinghole (515) andalimitinggroove (516) extending along an arc about a center of said first mounting hole (515); and
said driving unit (52) includes
a turning member (521) rotatably engaging said first mounting hole (515), and
a pivoting member (522) having
a limiting portion (526) that movably engages said limiting groove (516) of said first fixing member (511),
a driving portion (527) that is pivotally connected to said linking member (53), and
a connecting portion (525) that is connected between said limiting portion (526) and said driving portion (527), and that is fixedly connected to said turning member (521) such that said pivoting member (522) is co-rotatable with said turning member (521).

3. The coffee machine as claimed in claim 2, further **characterized in that** said limiting groove (516) of said first fixing member (511) has opposite first and second ends (517, 518), said limiting portion (526) of said pivoting member (522) being located at said first end (517) when said steam spout (13) is at the engaging position, said limiting portion (526) of said pivoting member (522) being located at said second end (518) when said steam spout (13) is at the disengaging position.

4. The coffee machine as claimed in any one of Claims 2 to 3, further **characterized in that**:
said frame unit (51) further includes a base frame (510) mounted on said brewing device (1) and mounted with said first fixing member (511); and
said operating device (5) further includes at least one guiding unit (54) mounted on said frame unit (51), and having a guiding channel (541) that extends through one of said base frame (510) and said steam spout (13) in an up-down direction, and a guiding rod (542) that is mounted on the other one of said base frame (510) and said steam spout (13) and that is slidably inserted into said guiding channel (541) for limiting said steam spout (13) to be upwardly and downwardly movable in the up-down direction.

5. The coffee machine as claimed in any one of Claims 2 to 4, further **characterized in that** said frame unit (51) further includes a second fixing member (511') spaced apart from said first fixing member (511) and having a secondmountinghole (515'), said turning member (521) rotatably engaging said first and second mounting holes (515, 515') of said first and second fixing members (511, 511'), said limiting portion (526) and said connecting portion (525) of said pivoting member (522) being located between said first and second fixing members (511, 511').

6. The coffee machine as claimed in any one of Claims 2 to 4, further **characterized in that** said turning member (521) has a rod portion (523) rotatably engaging said first mounting hole (515) of said first fixing member (511) and connected fixedly to said connecting portion (525) of said pivoting member (522), and a knob portion (524) connected to an end of said rod portion (523) that is opposite to said pivoting member (522).

7. The coffee machine as claimed in any one of Claims 1 to 6, further **characterized in that** said steam spout (13) of said brewing device (1) has a seat body (2) having an outer wall (21) that defines a steam passage (23), and a control valve (3) disposed in said outer wall (21) and operable for controlling passage of the steam through said steam passage (23).

8. The coffee machine as claimed in claim 7, further **characterized in that**:
said seat body (2) further has a block wall (22) extending inwardly from said outer wall (21) into said steam passage (23);
said control valve (3) has
a control rod (31) having a rod segment (311) that extends through said block wall (22) and that is upwardly and downwardly movable, an abutment segment (312) that is connected to a bottom end of said rod segment (311), that has a diameter larger than that of said rod segment (311), and that is formed with at least one vent hole (314), and a neck segment (313) that has a diameter smaller than that of said rod segment (311), said abutment and neck segments (312, 313) being disposed at opposite sides of said block wall (22),
a sealing member (32) sleeved on said neck segment (313) of said control rod (31), and
a resilient member (33) having top and bottom ends that respectively and resiliently bias against said block wall (22) and said abutment segment (312) of said control rod (31);
said steam inlet portion (42) of said milk box (4) has an inserting wall (421);
when said steam spout (13) is at the engaging position, said inserting wall (421) of said steam inlet portion (42) is inserted into said steam passage (23) and pushes upwardly said abutment segment (312) of said control rod (31) against a resilient force of said resilient member (33) so that said sealing member (32) is moved upwardly to be separated from said block wall (22) to allow the passage of the steam through said steam passage (23); and
when said steam spout (13) is at the disengaging position, said resilient member (33) biasing downwardly said abutment segment (312) to move said control rod (31) downwardly so that said sealing member (32) abuts against said block wall (22) of said seat body (2) to block the passage of the steam through said steam passage (23).

9. The coffee machine as claimed in any one of Claims 1 to 8, further **characterized in that** said brewing device (1) further includes a housing (11) having spaced-apart lower and upper walls (111, 112), and a receiving space (113) that is defined between said lower and upper walls (111, 112), said milk box (4) being removably received in said receiving space (113).

10. The coffee machine as claimed in claim 9, further **characterized in that** said housing (11) further has a stop member (114) disposed below said upper wall (112) for limiting upward and downward movements of said milk box (4).
